Europäisches Patentamt

European Patent Office

Office européen des brevets

(11) EP 1 137 084 A2

(19)

(12) **EUROPEAN PATENT APPLICATION**

(43) Date of publication:
26.09.2001 Bulletin 2001/39

(51) Int Cl.[7]: **H01M 4/32**, H01M 4/52,
H01M 10/30

(21) Application number: 01107061.2

(22) Date of filing: 21.03.2001

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **22.03.2000 JP 2000079595**

(71) Applicant: **Sanyo Electric Co., Ltd.
Moriguchi-shi, Osaka (JP)**

(72) Inventors:
• **Ogasawara, Takeshi, c/o Sanyo Electric Co., Ltd.
Osaka (JP)**
• **Tokuda, Mitsunori, c/o Sanyo Electric Co., Ltd.
Osaka (JP)**
• **Yano, Mutsumi, c/o Sanyo Electric Co., Ltd.
Osaka (JP)**
• **Higashiyama, Nobuyuki,
c/o Sanyo Electric Co.,Ltd.
Osaka (JP)**
• **Itoh, Yasuhiko, c/o Sanyo Electric Co.,Ltd.
Osaka (JP)**

(74) Representative: **VOSSIUS & PARTNER
Siebertstrasse 4
81675 München (DE)**

(54) **Positive electrode active material powder for nonsintered nickel electrode**

(57)    The positive electrode active material powder of this invention includes β-nickel hydroxide particles containing aluminum in a ratio of 0.5 through 9 atom% based on the total amount of nickel and aluminum and having a half-width of a peak in a plane (101) in the X-ray powder diffraction pattern of 0.8° /2 θ or more. Owing to this positive electrode active material powder, a nonsintered nickel electrode having high active material utilization and large discharge capacity can be realized.

EP 1 137 084 A2

**Description**

This application claims the Paris convention priority of Japanese Patent Application No. 2000-079595 filed on March 22, 2000, which is incorporated herein by reference.

The present invention relates to a positive electrode active material powder for use in a nonsintered nickel electrode, and more particularly, it relates to a positive electrode active material powder for realizing a nonsintered nickel electrode having high active material utilization and large discharge capacity.

It is well known that a nickel-metal hydride storage battery or a nickel-cadmium storage battery uses, as a positive electrode, a sintered nickel electrode prepared by impregnating, with an active material (nickel hydroxide), a sintered substrate obtained by sintering a nickel powder into a screen or the like.

In preparing a sintered nickel electrode, it is necessary to use a sintered substrate with large porosity in order to pack a large amount of an active material. However, a bond between nickel particles obtained through sintering is so weak that the porosity of the sintered substrate cannot exceed 80%. Therefore, a sintered nickel electrode has a disadvantage of a small packing amount of the active material. Furthermore, since a pore diameter of a sintered substance of a nickel powder is generally as small as 10 $\mu$m or less, it is necessary to employ solution impregnation in which a complicated impregnating process should be repeated several times in order to load a sintered substrate with an active material.

In view of such disadvantages, a nonsintered nickel electrode has recently been proposed. A nonsintered nickel electrode is prepared by, for example, loading a highly porous substrate with a kneaded substance (paste) of an active material (nickel hydroxide), a binder (such as a methyl cellulose aqueous solution) and a conductive agent (such as cobalt monoxide). Since a nonsintered nickel electrode can use a highly porous substrate (with porosity of 95% or more), not only a large amount of an active material can be packed but also the active material can be loaded into the substrate with ease.

When a highly porous substrate is used in a nonsintered nickel electrode in order to pack a large amount of an active material, however, the current collecting power of the substrate is degraded, so as to lower active material utilization.

Therefore, in order to improve the active material utilization of a nonsintered nickel electrode, use of $\alpha$-nickel hydroxide represented by a composition formula, $Ni_{1-2X}Al_{2X}(OH)_2(CO_3)_X$, as an active material has been proposed (in Japanese Laid-Open Patent Publication No. 10-172561/1998).

The present inventors, however, have found as a result of examination that use of this $\alpha$-nickel hydroxide cannot sufficiently improve the active material utilization because of a low rate of deinserting/inserting protons.

The present invention was devised in consideration of the aforementioned conventional disadvantages, and an object of the invention is providing a positive electrode active material powder for realizing a nonsintered nickel electrode having high active material utilization and large discharge capacity.

The positive electrode active material powder of this invention comprises $\beta$-nickel hydroxide particles including, as a solid-solution element, aluminum in a ratio of 0.5 through 9 atom% based on the total amount of nickel and aluminum and having a half-width of a peak in a plane (101) in an X-ray powder diffraction pattern of 0.8° /2$\theta$ or more.

As a result, the invention provides a positive electrode active material powder for realizing a nonsintered nickel electrode having high active material utilization and large discharge capacity.

The positive electrode active material powder of this invention comprises $\beta$-nickel hydroxide particles including, as a solid-solution element, aluminum in a ratio of 0.5 through 9 atom% based on the total amount of nickel and aluminum and having a half-width of a peak in a plane (101) in an X-ray powder diffraction pattern of 0.8° /2$\theta$ or more.

The $\beta$-nickel hydroxide particles used in this invention should include, as a solid-solution element, aluminum in a ratio of 0.5 through 9 atom% based on the total amount of nickel and aluminum. When the content of aluminum is smaller than 0.5 atom%, the rate of deinserting/inserting protons cannot be sufficiently increased through inclusion of aluminum as the solid-solution element. On the other hand, when the content of aluminum exceeds 9 atom%, the content of nickel hydroxide used as the active material becomes so small that the specific capacity of the positive electrode active material powder is lowered.

Furthermore, the $\beta$-nickel hydroxide particles used in this invention should have a half-width of a peak in a plane (101) in the X-ray powder diffraction pattern of 0.8° /2 $\theta$ or more. When the half-width is smaller than 0.8° /2 $\theta$, the rate of deinserting/inserting protons is lowered because of small distortion of the crystal structure.

The positive electrode active material powder of this invention can be prepared as a precipitate, for example, by dissolving nickel sulfate and aluminum sulfate in water, adjusting pH of the resultant aqueous solution by adding dropwise a mixture of a sodium hydroxide aqueous solution and an ammonia aqueous solution and stirring the resulting solution for a predetermined period of time. The half-width of the peak in the plane (101) varies depending upon pH of the aqueous solution. As the pH is higher, the half-width of the peak in the plane (101) of resultant $\beta$-nickel hydroxide is larger.

The $\beta$-nickel hydroxide particles preferably further include, as a solid-solution element, at least one element M selected from the group consisting of manganese, cobalt, zinc, calcium, magnesium, yttrium and ytterbium. When any of these elements M is included as a solid-solution element, the rate of deinserting/inserting protons is further increased, so as to further improve the active material utilization. The content of the element M is preferably 10 atom% or less. When the content exceeds 10 atom%, the content of nickel hydroxide in the $\beta$-nickel hydroxide particles becomes so small that the discharge capacity is lowered.

An example of a nonsintered nickel electrode suitable to use the positive electrode active material powder of this invention is a pasted nickel electrode, which is prepared by applying a paste of the positive electrode active material powder, a conductive agent and a binder on a conductive substrate and drying the resultant. The conductive agent may be included in the electrode by forming a conductive agent layer on particle surfaces of the positive electrode active material powder. Examples of the conductive agent are cobalt monoxide, metallic cobalt, cobalt hydroxide, cobalt oxyhydroxide and a sodium-doped cobalt compound. An example of the binder is a methyl cellulose aqueous solution. Examples of the conductive substrate used in a pasted nickel electrode are foamed nickel, a felt-like porous substance of metallic fiber and a punching metal. In addition, the positive electrode active material powder of this invention is suitably applied to a tubular nickel electrode in which the positive electrode active material powder is packed within a tubular metallic conducting substance and a nickel electrode for a button-type battery in which the positive electrode active material powder is compressedly molded together with a gauze-shaped metallic conducting substance.

Examples of an alkaline storage battery suitable to use the positive electrode active material powder of this invention are a nickel-metal hydride storage battery (using a hydrogen-absorbing alloy electrode as the negative electrode), a nickel-cadmium storage battery (using a cadmium electrode as the negative electrode) and a nickel-zinc storage battery (using a zinc electrode as the negative electrode).

Embodiments

Other features of the invention will become more apparent in the course of the following descriptions of exemplary embodiments which are given for illustration of the invention and not intended to be limiting thereof.

Experiment 1

Pasted nickel electrodes each using a positive electrode active material powder according to this invention and pasted nickel electrodes each using a comparative positive electrode active material powder were prepared, so as to examine the active material utilization and the discharge capacity of the respective electrodes through a battery test.

Embodiment 1

Step 1: To 5 liters of an aqueous solution of 167 g of nickel sulfate and 9.71 g of aluminum sulfate dissolved in water, a mixture of a 1 mol/liter sodium hydroxide aqueous solution and a 10 wt% ammonia aqueous solution in a weight ratio of 1:1 was added with stirring and keeping the temperature at 50°C, so that the resultant solution could be adjusted to pH 11.5, and the solution was stirred for 1 hour for proceeding a reaction. During the reaction, every time the pH was slightly lowered, an appropriate amount of the mixture was added dropwise so as to keep pH 11.5. Subsequently, a precipitate was filtered off, washed with water, dried under vacuum and crushed, thereby preparing a nickel hydroxide particle powder a1 with an average particle size of 10 $\mu$ m to be used as a positive electrode active material powder. It was confirmed through an atomic absorption analysis that the nickel hydroxide particle powder a1 included, as a solid-solution element, aluminum in a ratio of 5 atom% based on the total amount of nickel and aluminum. Also, a half-width of a peak in a plane (101) obtained by an X-ray powder diffraction method under conditions described below was 1.0° /2θ. It was confirmed on the basis of this half-width that the nickel hydroxide particle powder al had a β-type crystal structure. In every embodiment and comparative example described below, the X-ray powder diffraction method was carried out also under the following conditions:

Counter electrode: Cu
Lamp voltage: 40 kV
Lamp current: 100 mA
Scanning rate: 2° /min.
Divergence slit: 1.0°
Scattering slit: 1.0°
Receiving slit: 0.3 mm

Step 2: A paste was prepared by kneading 88 parts by weight of the nickel hydroxide particle powder al, 12 parts by weight of cobalt monoxide serving as a conductive agent and 20 parts by weight of a 1 wt% methyl cellulose aqueous solution. The paste was loaded into a porous substrate of foamed nickel (with porosity of 95% and an average pore diameter of 200 μ m), and the resultant was dried and pressed into a pasted nickel electrode aa1 with a length of 70 mm, a width of 40 mm and a thickness of 0.70 mm. A nonsintered nickel electrode prepared in every embodiment and comparative example described below had the same dimension as that of the pasted nickel electrode aa1.

Step 3: An alkaline storage battery A1 in an AA size (with battery capacity of approximately 1000 mAh) was fabricated by using the pasted nickel electrode aa1 (as a positive electrode), a known pasted cadmium electrode having capacity 1.5 times as large as that of the positive electrode (as a negative electrode having a length of 85 mm, a width of 40 mm and a thickness of 0.35 mm), a polyamide nonwoven fabric (as a separator), a 30 wt% potassium hydroxide aqueous solution (as an alkaline electrolyte), a metallic battery can, a metallic battery cover and the like. In this battery, the negative electrode capacity was approximately 1.5 times as large as the positive electrode capacity. Also, in an alkaline storage battery fabricated in every embodiment and comparative example described below, the negative electrode capacity was approximately 1.5 times as large as the positive electrode capacity.

Embodiment 2

A nickel hydroxide particle powder a2, a pasted nickel electrode aa2 and an alkaline storage battery A2 were obtained in the same manner as in Embodiment 1 except that 5 liters of an aqueous solution of 167 g of nickel sulfate and 0.92 g of aluminum sulfate dissolved in water was used in Step 1 instead of 5 liters of the aqueous solution of 167 g of nickel sulfate and 9.71 g of aluminum sulfate dissolved in water. The nickel hydroxide particle powder a2 was packed in the same amount as that of the nickel hydroxide particle powder a1 packed in Embodiment 1. It was confirmed through the atomic absorption analysis that the nickel hydroxide particle powder a2 included, as a solid-solution element, aluminum in a ratio of 0.5 atom% based on the total amount of nickel and aluminum. Also, a half-width of a peak in the plane (101) obtained by the X-ray powder diffraction method was 1.0° /2θ. It was confirmed on the basis of this half-width that the nickel hydroxide particle powder a2 had a β-type crystal structure.

Embodiment 3

A β-nickel hydroxide particle powder a3, a pasted nickel electrode aa3 and an alkaline storage battery A3 were obtained in the same manner as in Embodiment 1 except that 5 liters of an aqueous solution of 167 g of nickel sulfate and 18.3 g of aluminum sulfate dissolved in water was used in Step 1 instead of 5 liters of the aqueous solution of 167 g of nickel sulfate and 9.71 g of aluminum sulfate dissolved in water. The nickel hydroxide particle powder a3 was packed in the same amount as that of the nickel hydroxide particle powder a1 packed in Embodiment 1. It was confirmed through the atomic absorption analysis that the nickel hydroxide particle powder a3 included, as a solid-solution element, aluminum in a ratio of 9 atom% based on the total amount of nickel and aluminum. Also, a half-width of a peak in the plane (101) obtained by the X-ray powder diffraction method was 1.0° /2 θ. It was confirmed on the basis of this half-width that the nickel hydroxide particle powder a3 had a β - type crystal structure.

Embodiment 4

A nickel hydroxide particle powder a4, a pasted nickel electrode aa4 and an alkaline storage battery A4 were obtained in the same manner as in Embodiment 1 except that pH 10.8 was kept in Step 1 instead of pH 11.5. The nickel hydroxide particle powder a4 was packed in the same amount as that of the nickel hydroxide particle powder al packed in Embodiment 1. It was confirmed through the atomic absorption analysis that the nickel hydroxide particle powder a4 included, as a solid-solution element, aluminum in a ratio of 5 atom% based on the total amount of nickel and aluminum. Also, a half-width of a peak in the plane (101) obtained by the X-ray powder diffraction method was 0.8° /2 θ. It was confirmed on the basis of this half-width that the nickel hydroxide particle powder a4 had a β-type crystal structure.

Embodiment 5

Eighty-eight parts by weight of the nickel hydroxide particle powder a1 and 12 parts by weight of cobalt monoxide were kneaded for 2 hours by a mechanical charge method. Thus, a nickel hydroxide particle powder a5 was prepared as a positive electrode active material powder by forming a conductive agent layer on particle surfaces of the nickel hydroxide particle powder a1. The nickel hydroxide particle powder al was used in this embodiment in the same amount as that of the nickel hydroxide particle powder a1 packed in Embodiment 1. Subsequently, a paste was prepared by kneading the nickel hydroxide particle powder a5 and 20 parts by weight of a 1 wt% methyl cellulose aqueous solution. The paste was loaded into a porous substrate of foamed nickel (with porosity of 95% and an average pore diameter of 200 μ m), and the resultant was dried and pressed into a pasted nickel electrode aa5 with a length of 70 mm, a width of 40 mm and a thickness of 0.70 mm. Thereafter, an alkaline storage battery A5 was fabricated in the same manner as in Step 3 of Embodiment 1 except that the pasted nickel electrode aa5 was used instead of the pasted nickel electrode aa1.

Comparative Example 1

A nickel hydroxide particle powder b1, a pasted nickel electrode bb1 and an alkaline storage battery B1 were obtained in the same manner as in Embodiment 1 except that 5 liters of an aqueous solution of 167 g of nickel sulfate and 0.18 g of aluminum sulfate dissolved in water was used in Step 1 instead of 5 liters of the aqueous solution of 167 g of nickel sulfate and 9.71 g of aluminum sulfate dissolved in water. The nickel hydroxide particle powder b1 was packed in the same amount as that of the nickel hydroxide particle powder al packed in Embodiment 1. It was confirmed through the atomic absorption analysis that the nickel hydroxide particle powder b1 included, as a solid-solution element, aluminum in a ratio of 0.1 atom% based on the total amount of nickel and aluminum. Also, a half-width of a peak in the plane (101) obtained by the X-ray powder diffraction method was $1.0°$ $/2\theta$. It was confirmed on the basis of this half-width that the nickel hydroxide particle powder bl had a β-type crystal structure.

Comparative Example 2

A nickel hydroxide particle powder b2, a pasted nickel electrode bb2 and an alkaline storage battery B2 were obtained in the same manner as in Embodiment 1 except that pH 10.2 was kept in Step 1 instead of pH 11.5. The nickel hydroxide particle powder b2 was packed in the same amount as that of the nickel hydroxide particle powder al packed in Embodiment 1. It was confirmed through the atomic absorption analysis that the nickel hydroxide particle powder b2 included, as a solid-solution element, aluminum in a ratio of 5 atom% based on the total amount of nickel and aluminum. Also, a half-width of a peak in the plane (101) obtained by the X-ray powder diffraction method was $0.6°$ $/2\theta$. It was confirmed on the basis of this half-width that the nickel hydroxide particle powder b2 had a β-type crystal structure.

Comparative Example 3

A 2.5 mol% nickel sulfate aqueous solution and a 15.3 mol% ammonia aqueous solution were previously mixed in a mixing vessel in a molar ratio between nickel and ammonia of 1:0.6, and the resultant mixture was continuously supplied to a reaction vessel. To the mixture contained in the reaction vessel, an aluminum sulfate aqueous solution and a sodium hydroxide aqueous solution were added as precipitants, so as to give a precipitate. The precipitate was filtered off, washed with water and dried at 60°C, thereby preparing a nickel hydroxide particle powder b3, represented by a composition formula, $Ni_{85}Al_{15}(OH)_2(CO_3)_{7.5}$, including aluminum in a ratio of 15 atom% based on the total amount of nickel and aluminum. Since there was a peak in a plane (003) in the profile obtained by the X-ray powder diffraction method, the nickel hydroxide particle powder b3 was confirmed to have an α -type crystal structure. Each of the precipitants was supplied by using a constant rate circulating pump. The constant rate circulating pump used for supplying the sodium hydroxide aqueous solution was linked to a pH adjustor, so as to automatically adjust the supply rate of the sodium hydroxide aqueous solution with the pH adjustor. Thus, the solution contained in the reaction vessel was kept at pH 11. The reaction vessel was a 5-liter beaker having a slit, in its upper portion, for continuously discharging the solution. The solution contained in the reaction vessel was stirred by using a DC motor at a rotation rate of 900 rpm. In order to sufficiently stir the solution and smoothly discharge the generated precipitate, impellers were provided in lower and central portions of the reaction vessel, a cylindrical baffle was provided in a central portion of the reaction vessel and a disc baffle was provided in an upper portion of the reaction vessel. The reaction vessel was kept at a predetermined temperature by using a constant temperature bath. Subsequently, the nickel hydroxide particle powder b3 was used as a positive electrode active material powder, so as to obtain a pasted nickel electrode bb3 and an alkaline storage battery B3 respectively different from the pasted nickel electrode aa1 and the alkaline storage battery A1 in the positive electrode active material powder alone. The nickel hydroxide particle powder b3 was packed in the same amount as that of the nickel hydroxide particle powder a1 packed in Embodiment 1.

With respect to each of the alkaline storage batteries A1 through A5 and B1 through B3, 5 charge-discharge cycles were run in each cycle of which the battery was charged at a rate of 0.1 C at 25°C for 16 hours and discharged at a rate of 1 C to 1.0 V at 25°C. In this manner, the active material utilization defined by the following formula and the discharge capacity at the 5th cycle of the pasted nickel electrode used in each battery were obtained. The results are shown in Table 1. Each of the active material utilization and the discharge capacity in Table 1 is shown as a relative index obtained by assuming the active material utilization or the discharge capacity of the pasted nickel electrode aa1 as 100.

Active material utilization (%) =

{Discharge capacity (mAh) / [Amount of nickel hydroxide (g)

x 288 (mAh/g)]} x 100

Table 1:

| Pasted nickel electrode | Content of aluminum (atom%) | Half-width ($°$ /2 θ) | Active material utilization | Discharge capacity |
|---|---|---|---|---|
| aa1 | 5 | 1.0 | 100 | 100 |
| aa2 | 0.5 | 1.0 | 96 | 96 |
| aa3 | 9 | 1.0 | 99 | 99 |
| aa4 | 5 | 0.8 | 98 | 98 |
| aa5 | 5 | 1.0 | 100 | 100 |
| bb1 | 0.1 | 1.0 | 88 | 88 |
| bb2 | 5 | 0.6 | 87 | 87 |
| bb3 | 15 | — | 94 | 82 |

As is obvious from comparison in the active material utilization and the discharge capacity between the pasted nickel electrodes aa1 through aa3 and the pasted nickel electrode bb1, in order to obtain a nonsintered nickel electrode with high active material utilization and large discharge capacity, it is necessary to use, as a positive electrode active material powder, a β-nickel hydroxide particle powder including aluminum in a ratio of 0.5 through 9 atom% based on the total amount of nickel and aluminum.

Also, as is obvious from comparison in the active material utilization and the discharge capacity between the pasted nickel electrodes aa1 and aa4 and the pasted nickel electrode bb2, in order to obtain a nonsintered nickel electrode with high active material utilization and large discharge capacity, it is necessary to use, as a positive electrode active material powder, a β-nickel hydroxide particle powder having a half-width of a peak in the plane (101) of $0.8°$ /2 θ or more.

The active material utilization is lower and the discharge capacity is smaller in the pasted nickel electrode bb3 than in the pasted nickel electrodes aal through aa5 because the positive electrode active material powder of this comparative electrode is an α-nickel hydroxide particle powder with a low rate of deinserting/inserting protons.

Experiment 2

Elements M that can be included, as a solid-solution element, in the β-nickel hydroxide particle powder were examined.

Pasted nickel electrodes cc1 through cc10 and alkaline storage batteries C1 through C10 respectively different from the pasted nickel electrode aa1 and the alkaline storage battery A1 in a positive electrode active material powder alone were obtained in the same manner as in Embodiment 1 except that 5 liter of an aqueous solution of 167 g of nickel sulfate, 9.71 g of aluminum sulfate and each element M listed in Table 2 dissolved in water was used in Step 1 instead of 5 liters of the aqueous solution of 167 g of nickel sulfate and 9.71 g of aluminum sulfate dissolved in water. As a crude material for calcium, calcium nitrate was used, and as crude materials for the elements M other than calcium, sulfates of the corresponding elements M were used. Table 2 shows the amount (g) of the used crude material of every element M. Each numerical value parenthesized in Table 2 corresponds to atom% of the element M based on the total amount of nickel and the element M, which was obtained by analyzing the positive electrode active material powder. The contents (atom%) of yttrium and ytterbium were obtained through emission spectroscopy (ICP), and the contents (atom%) of the elements M other than yttrium and ytterbium were obtained through the atomic absorption analysis.

Table 2:

| Pasted nickel electrode | Amount (g) of used sulfate or nitrate of element M (parenthesized value corresponding to atom% of M based on total amount of nickel and M) |
|---|---|
| cc1 | $MnSO_4$: 8.6 (5) |
| cc2 | $CoSO_4$: 8.8 (5) |

Table 2:   (continued)

| Pasted nickel electrode | Amount (g) of used sulfate or nitrate of element M (parenthesized value corresponding to atom% of M based on total amount of nickel and M) |
|---|---|
| cc3 | $ZnSO_4$: 9.20 (5) |
| cc4 | $Ca(NO_3)_2$: 9.30 (5) |
| cc5 | $MgSO_4$: 6.83 (5) |
| cc6 | $Y_2(SO_4)_3$: 13.04 (5) |
| cc7 | $Yb_2(SO_4)_3$: 17.98 (5) |
| cc8 | $MnSO_4$: 18.0 (10) |
| cc9 | $MnSO_4$: 22.2 (12) |
| cc10 | $MnSO_4$: 4.2 (2.5) & $CoSO_4$: 4.28 (2.5) |

Subsequently, each battery was subjected to a charge-discharge test under the same conditions as in Experiment 1, so as to obtain the active material utilization and the discharge capacity at the 5th cycle. The results are shown in Table 3. The active material utilization and the discharge capacity of the pasted nickel electrode aa1 listed in Table 1 are also shown in Table 3. Each of the active material utilization and the discharge capacity in Table 3 is shown as a relative index obtained by assuming the active material utilization or the discharge capacity at the 5th cycle of the pasted nickel electrode aa1 as 100.

Table 3:

| Pasted nickel electrode | Active material utilization | Discharge capacity |
|---|---|---|
| aa1 | 100 | 100 |
| cc1 | 105 | 105 |
| cc2 | 102 | 102 |
| cc3 | 101 | 101 |
| cc4 | 101 | 101 |
| cc5 | 101 | 101 |
| cc6 | 103 | 103 |
| cc7 | 101 | 101 |
| cc8 | 103 | 103 |
| cc9 | 102 | 90 |
| cc10 | 106 | 106 |

It is understood from Table 3 that higher active material utilization and larger discharge capacity can be attained by allowing the β-nickel hydroxide particles to include, as a solid-solution element, at least one element M selected from the group consisting of manganese, cobalt, zinc, calcium, magnesium, yttrium and ytterbium, in addition to aluminum. Furthermore, on the basis of the result that the pasted nickel electrode cc9 has smaller discharge capacity than the other pasted nickel electrodes, it is understood that the content of the element M is preferably 10 atom% or less.
Although cobalt monoxide was used as the conductive agent in each of the embodiments, any of metallic cobalt, cobalt hydroxide, cobalt oxyhydroxide and a sodium-including cobalt compound may be used instead.

**Claims**

1.   A positive electrode active material powder for a nonsintered nickel electrode comprising β -nickel hydroxide particles including, as a solid-solution element, aluminum in a ratio of 0.5 through 9 atom% based on a total amount of nickel and aluminum and having a half-width of a peak in a plane (101) in an X-ray powder diffraction pattern of 0.8° /2θ or more.

2.   The positive electrode active material powder for a nonsintered nickel electrode according to Claim 1,
     wherein the β-nickel hydroxide particles further include, as a solid-solution element, at least one element M selected from the group consisting of manganese, cobalt, zinc, calcium, magnesium, yttrium and ytterbium in a ratio of 10 atom% or less based on a total amount of nickel and the element M.

3. The positive electrode active material powder for a nonsintered nickel electrode according to Claim 1 or 2, wherein a conductive agent layer is formed on surfaces of the $\beta$-nickel hydroxide particles.

4. A pasted nickel electrode comprising a mixture of the positive electrode active material powder of Claim 1 or 2, a conductive agent and a binder, the mixture being prepared as a paste applied on a conductive substrate and dried.

5. A pasted nickel electrode comprising a mixture of the positive electrode active material powder of Claim 3 and a binder, the mixture being prepared as a paste applied on a conductive substrate and dried.

6. An alkaline storage battery comprising the pasted nickel electrode of Claim 4 or 5 as a positive electrode.